# EUROPEAN PATENT SPECIFICATION

(11) **EP 3 893 703 B1**
(45) Date of publication and mention of the grant of the patent: **27.03.2024**
(21) Application number: 19798265.5
(22) Date of filing: 04.11.2019
(51) Int. Cl.: A47J 31/44, A47J 31/06

(54) **A HOT BEVERAGE PREPARATION MACHINE**
MASCHINE ZUR ZUBEREITUNG HEISSER GETRÄNKE
MACHINE DE PRÉPARATION DE BOISSON CHAUDE

(30) Priority: 12.12.2018 TR 201819232
(43) Date of publication of application: 20.10.2021
(73) Proprietor: Arçelik Anonim Sirketi, 34445 Istanbul (TR)
(72) Inventor: OZTURK, Tansel, 34950 ISTANBUL (TR); MUTLUDOGAN, Mehmet, 34950 ISTANBUL (TR); KAYISDAG, Varol, 34950 ISTANBUL (TR); TOSUN, Isa, 34950 ISTANBUL (TR); OZBEK, Hale, 34950 ISTANBUL (TR)
(86) International application number: PCT/EP2019/080055
(87) International publication number: WO 2020/120031

(56) References cited:
- WO-A1-2013/098252
- DE-U1-202006 004 245
- US-A1- 2017 188 748

## Description

The present invention relates to a hot beverage preparation machine for automatically preparing beverages.

In hot beverage preparation machines, the water filled into the water reservoir is heated by a water heater and is transferred to the brewing chamber containing raw beverage material to be prepared. The brewing process is performed in the brewing chamber as a result of the interaction between the raw beverage material and water. The brewed beverage is afterwards transferred into a pot and served. The period of time the raw beverage material interacts with the water is one of the important parameters which defines the brew strength, hence the taste of the beverage. In the state of the art, machines are known which carry out brewing process for certain periods of time as per user selection. After staying in the brewing chamber for a certain period of time, the beverage is transferred into the pot. The water is transferred into the brewing chamber through a single opening. However, in order to brew various beverages such as coffee and some herbal teas in a tasty and efficient manner, the water must slowly wet the entire raw beverage material. Otherwise, the entire raw beverage material in the brewing chamber cannot be brewed.

In the state of the art Patent Document No. JPH0687740, a hot beverage preparation machine is disclosed, wherein the raw beverage material is wetted by means of the spraying member. Document US 2017/188748 A1 discloses a hot beverage preparation machine according to the preamble of claim 1.

The aim of the present invention is the realization of a hot beverage preparation machine wherein the brewing efficiency is increased.

The hot beverage preparation machine realized in order to attain the aim of the present invention and explicated in the claims, comprises a body; a water reservoir which is placed onto the body and wherein the brewing water is heated; a brewing chamber wherein the brewing process is performed as a result of the interaction between raw beverage material and water; a cover which cuts off the contact between the brewing chamber and the outer environment; a housing which is situated on the body; and a pot which is situated on the housing so as to allow the beverage brewed in the brewing chamber to be distilled therein. When the brewing process is completed, the hot beverage is distilled from the brewing chamber to the pot and separated from the raw beverage material. Thus, the taste of the beverage obtained momentarily during the brewing process is kept for a longer time and the beverage is prevented from getting stale.

The hot beverage preparation machine of the present invention comprises a spraying member which is composed of a plurality of arms each having a plurality of holes, and a circular headpiece whereto the arms are connected. The holes which are arranged on the arm provide the delivery of the water to the raw beverage material. The arms are inclined from the cover towards the brewing chamber. Thus, the water is enabled to wet the raw beverage material in a more quick and effective manner. By means of the holes arranged on the headpiece, the water is delivered more densely.

In an embodiment of the present invention, the hot beverage preparation machine comprises a plurality of channels which are arranged on the arm. The holes are positioned at the part of the channels closest to the raw beverage material. By means of the channels, the arms deliver homogeneously water to a large area.

In an embodiment of the present invention, the hot beverage preparation machine comprises a plurality of channels with various lengths which are arranged on the same arm. After being delivered through the shorter channels, the water flows into the longer channels. Consequently, a homogeneous water distribution is performed. Every part of the raw beverage material is wetted in the same amount.

In an embodiment of the present invention, the hot beverage preparation machine comprises a delivery line which delivers the water to the spraying member and the headpiece which delivers the water coming from the delivery line to the arms. One end of the delivery line is positioned on the water reservoir while the other end is positioned on the spraying member. The water is accumulated on the headpiece and delivered from there to the arms.

In an embodiment of the present invention, the hot beverage preparation machine comprises the headpiece which is inclined from the delivery line towards the arms. Thus, the water delivered onto the headpiece is continuously transferred to the arms. The water is not accumulated in the headpiece.

In an embodiment of the present invention, the hot beverage preparation machine comprises a groove which is arranged around the headpiece, a ring whereon the arms are disposed, and a protrusion which is provided on the rim and which enables the rim to be mounted to the headpiece. Thus, the protrusion moves inside the groove, enabling the rim to rotate around the headpiece.

In an embodiment of the present invention, the hot beverage preparation machine comprises a shutter which is provided on the channel and a control unit which controls the shutter. A shutter is provided at the part where each channel is connected to the headpiece. The water is delivered to the channels according to the amount of raw beverage material placed into the brewing chamber.

In an embodiment of the present invention, the hot beverage preparation machine comprises the control unit which prevents the water from being delivered to the spraying member when the cover is open. Thus, the safety of the user is ensured.

By means of the present invention, a hot beverage preparation machine is realized, wherein the brewing chamber is carried out by homogeneously wetting the raw beverage material.

The hot beverage preparation machine realized in order to attain the aim of the present invention is illustrated in the attached figures, where:

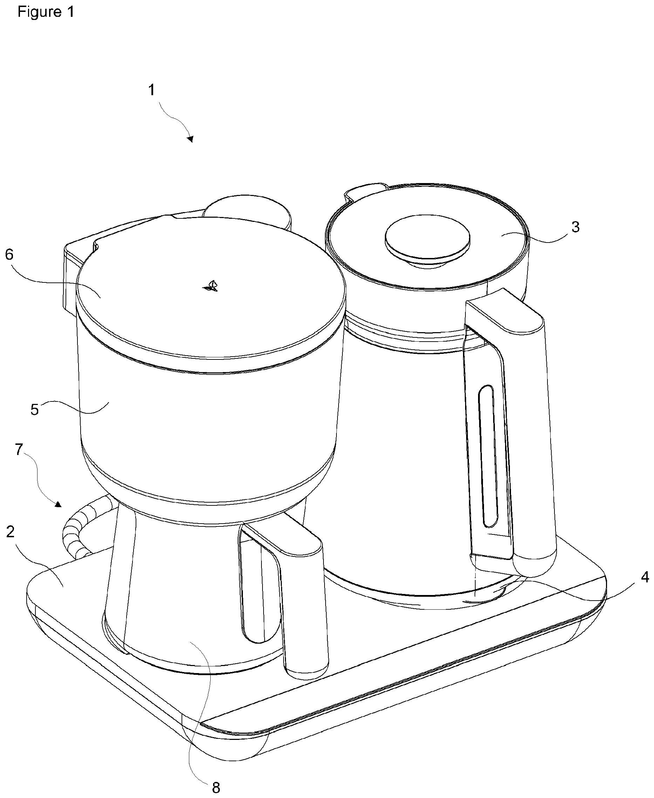

Figure 1 - is the perspective view of the hot beverage preparation machine.

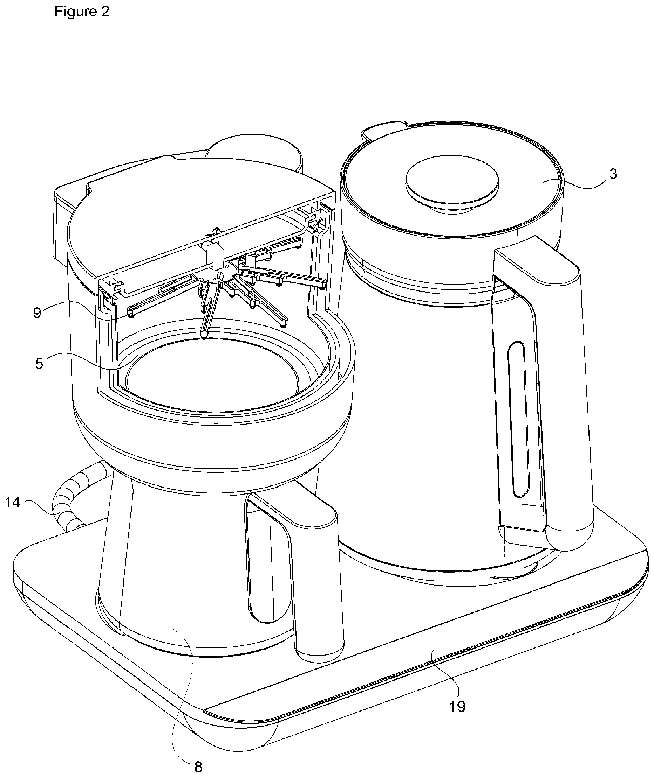

Figure 2 - is the cross-sectional view of the brewing chamber.

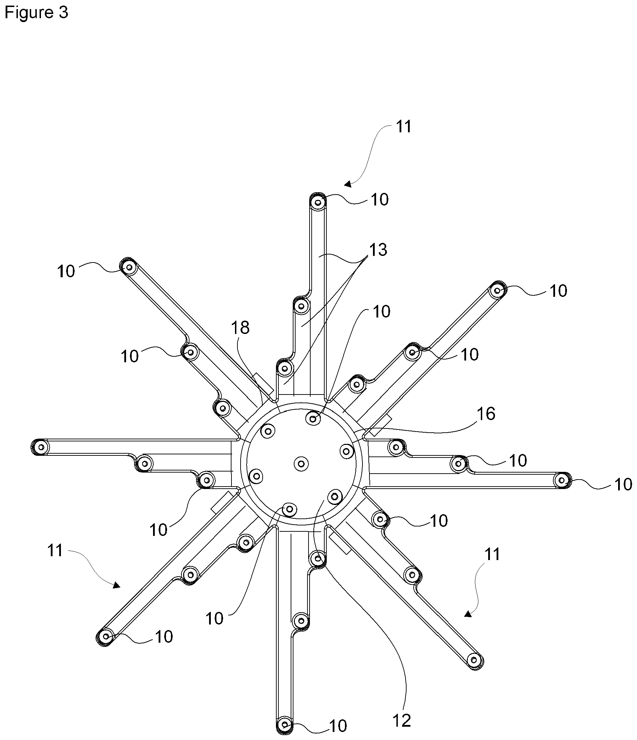

Figure 3 - is the schematic view of the spraying member.

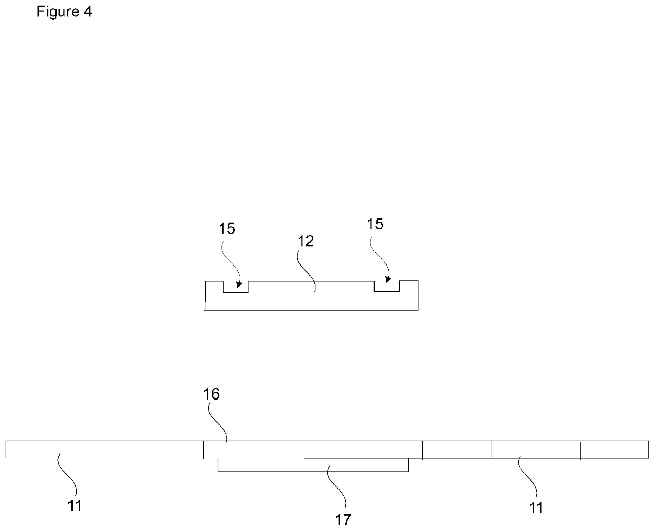

Figure 4 - is the front view of the headpiece and the arms.

The elements illustrated in the figures are numbered as follows:
1. Hot beverage preparation machine
2. Body
3. Water reservoir
4. Water heater
5. Brewing chamber
6. Cover
7. Housing
8. Pot
9. Spraying member
10. Hole
11. Arm
12. Headpiece
13. Channel
14. Delivery line
15. Groove
16. Ring
17. Protrusion
18. Shutter
19. Control unit

The hot beverage preparation machine (1) comprises a body (2); a water reservoir (3) wherein water is filled; a water heater (4) enabling the water in the water reservoir (3) to be heated; a brewing chamber (5) wherein the raw material of the beverage to be prepared is put and whereto the water heated in the water reservoir (3) is transferred, wherein the brewing process is performed as a result of the interaction between the raw beverage material and water; a cover (6) for isolating the brewing chamber (5) from the outer environment; a housing (7) which is situated on the body (2), under the brewing chamber (5); a pot (8) which is placed into the housing (7), the top surface thereof being at least partially open and whereto the beverage brewed in the brewing chamber (5) is transferred; and a spraying member (9) which is provided on the cover (6) and which enables the raw beverage material to be wetted. The raw material of the beverage is put into the brewing chamber (5) by the user. By taking the water boiled by means of the water heater (4) into the brewing chamber (5), the beverage is brewed for a period of time. The prepared beverage at the completion of the brewing process is transferred from the brewing chamber (5) into the pot (7). By means of the actuation mechanism (8), the beverage brewed in the brewing chamber (5) is transferred into the pot (7). By means of the spraying member (9), the hot water is sprayed onto the raw beverage material. Thus, the entire raw beverage material in the brewing chamber (5) is wetted.

The hot beverage preparation machine (1) of the present invention comprises the spraying member (9) having a plurality of arms (11) which have a plurality of holes (10) thereon and which are inclined from the cover (6) into the brewing chamber (5), the spraying member (9) further having a headpiece (12) which have holes (10) thereon and whereto the arms (11) are connected. The spraying member (9) is composed of a circular headpiece (12) and a plurality of arms (11) connected to the headpiece (12). The holes (10) through which the water is sprayed are arranged on the arms (11) and the headpiece (12). By means of the arms (11), the surface area swept is increased. The arms (11) are inclined from the cover (6) into the brewing chamber (5). Thus, the water is delivered more quickly.

In an embodiment of the present invention, the hot beverage preparation machine (1) comprises a plurality of channels (13) which are arranged on each arm (11) and which have the holes (10) at the region closest to the raw beverage material. A plurality of channels (13) are arranged in each arm (11). Thus, the surface area which can be wetted by one arm (11) is increased. The holes (10) are arranged at the ends of the channels (13).

In an embodiment of the present invention, the hot beverage preparation machine (1) comprises successive channels (13) each being longer than the other, which are arranged on the same arm (11). The channels (13) are arranged side by side with increasing lengths. Thus, first the shorter channels (13) are filled and then the water flows towards the longer channels (13). Consequently, a larger surface area in the brewing chamber (5) can be wetted.

In an embodiment of the present invention, the hot beverage preparation machine (1) comprises a delivery line (14) with one end on the water reservoir (3) and the other end on the spraying member (9), which provides the delivery of the water heated in the water reservoir (3) to the brewing chamber (5), and the headpiece (12) which distributes the water delivered through the delivery line (14) to the arms (11). By means of the delivery line (14), the water heated in the water reservoir (3) is delivered to the brewing chamber (5). The water delivered through the delivery line (14) is transferred to the headpiece (12) and flows from there towards the brewing chamber (5) and the arms (11).

In an embodiment of the present invention, the hot beverage preparation machine (1) comprises the headpiece (12) which is inclined from the delivery line (14) towards the arms (11). An inclination is provided on the headpiece (12) from the delivery line (14) towards the arms (11). Thus, the amount of water delivered to the arms (11) is higher than the amount of water delivered to the headpiece (12).

In an embodiment of the present invention, the hot beverage preparation machine (1) comprise a groove (15) which is arranged around the headpiece (12), a ring (16) whereon the arms (11) are arranged in a circular layout, and a protrusion (17) which enables the rim (16) to be mounted to the groove (15). The arms (11) are arranged on the ring (16). Thus, the arms (11) can be attached/detached as a single piece. By fitting the circular protrusion (17) around the ring (16) into the groove (15), the arms (11) are attached to the headpiece (12). By means of the movement of the protrusion (17) in the groove (15), the arms (11) can rotate around the headpiece with the pressure of the water. Thus, the surface area swept is increased.

In an embodiment of the present invention, the hot beverage preparation machine (1) comprises a plurality of shutters (18) each disposed at the part where each channel (13) is connected to the headpiece (12), controlling the delivery of water to the channels (13), and a control unit (19) which controls the shutters (18) according to the amount of raw beverage material. The shutters (18) on different channels (13) are opened according to the amount of raw beverage material. When the shutters (18) are opened, the water flows through the channel (13) so as to be delivered into the brewing chamber (5) via the holes (10).

In an embodiment of the present invention, the hot beverage preparation machine (1) comprises the control unit (19) which prevents the water from being delivered from the spraying member (9) when the cover (6) is open. Thus, when the cover (6) is open, the user is prevented from getting in contact with hot water. Consequently, the safety of the user is improved.

By means of the present invention, a hot beverage preparation machine (1) is realized, comprising a spraying member (9) for homogeneously wetting the raw beverage material in the brewing chamber (5). By means of the arms (11) disposed on the spraying member (9), the water is delivered to a larger surface area. Thus, especially coffee and some herbal teas are enabled to be effectively brewed.

## Claims

1. A hot beverage preparation machine (1) **comprising**
- a body (2);
- a water reservoir (3) wherein water is filled;
- a water heater (4) enabling the water in the water reservoir (3) to be heated;
- a brewing chamber (5) wherein the raw material of the beverage to be prepared is put and whereto the water heated in the water reservoir (3) is transferred, wherein the brewing process is performed as a result of the interaction between the raw beverage material and water;
- a cover (6) for isolating the brewing chamber (5) from the outer environment;
- a housing (7) which is situated on the body (2), under the brewing chamber (5);
- a pot (8) which is placed into the housing (7), the top surface thereof being at least partially open and whereto the beverage brewed in the brewing chamber (5) is transferred; and
- a spraying member (9) having a plurality of arms (11) which have a plurality of holes (10) thereon for delivering the water onto the raw beverage material, which is provided on the cover (6) and which enables the raw beverage material put into the brewing chamber (5) to be wetted,
- **characterized by** the plurality of arms (11) which, when the cover (6) is closed, are inclined from the cover (6) towards the brewing chamber (5), and the spraying member (9) further having a headpiece (12) which has holes (10) thereon and whereto the arms (11) are connected.

2. A hot beverage preparation machine (1) as in Claim 1, **characterized by** a plurality of channels (13) which are arranged on each arm (11) and which have the holes (10) at the region closest to the raw beverage material.

3. A hot beverage preparation machine (1) as in Claim 2, **characterized by** successive channels (13) each being longer than the other, which are arranged on the same arm (11).

4. A hot beverage preparation machine (1) as in any one of the above claims, **characterized by** a delivery line (14) with one end on the water reservoir (3) and the other end on the spraying member (9), which provides the delivery of the water heated in the water reservoir (3) to the brewing chamber (5), and the headpiece (12) which distributes the water delivered through the delivery line (14) to the arms (11).

5. A hot beverage preparation machine (1) as in Claim 4, **characterized by** the headpiece (12) which is inclined from the delivery line (14) towards the arms (11).

6. A hot beverage preparation machine (1) as in any one of the above claims, **characterized by** a groove (15) which is arranged around the headpiece (12), a ring (16) whereon the arms (11) are arranged in a circular layout, and a circular protrusion (17) which enables the rim (16) to be mounted to the groove (15).

7. A hot beverage preparation machine (1) as in any one of the Claims 2 to 6, **characterized by** a plurality of shutters (18) each disposed at the part where each channel (13) is connected to the headpiece (12), controlling the delivery of water to the channels (13), and a control unit (19) which controls the shutters (18) according to the amount of raw beverage material.

8. A hot beverage preparation machine (1) as in Claim 7, **characterized by** the control unit (19) which prevents the water from being delivered from the spraying member (9) when the cover (6) is open.

## Patentansprüche

1. Eine Heißgetränkezubereitungsmaschine (1) **umfasst**
- einen Körper (2);
- ein Wasserbehälter (3), in das Wasser eingefüllt ist;
- einen Warmwasserbereiter (4), der das Erhitzen des Wassers im Wasserbehälter (3) ermöglicht;
- eine Brühkammer (5), in die das Rohmaterial des zuzubereitenden Getränks eingebracht wird und in die das im Wasserbehälter (3) erhitzte Wasser überführt wird, wobei der Brühvorgang durch die Wechselwirkung zwischen dem Rohgetränkematerial und dem Wasser durchgeführt wird;
- eine Abdeckung (6) zur Isolierung der Brühkammer (5) von der äußeren Umgebung;
- ein Gehäuse (7), das sich auf dem Körper (2) unter der Brühkammer (5) befindet;
- eine in das Gehäuse (7) eingesetzte Kanne (8), deren Oberseite zumindest teilweise offen ist und in die das in der Brühkammer (5) gebraute Getränk überführt wird; und
- ein Sprühelement (9) mit einer Vielzahl von Armen (11), die eine Vielzahl von Löchern (10) zur Abgabe des Wassers auf das Rohgetränkematerial aufweisen, das an der Abdeckung (6) vorgesehen ist und die Befeuchtung des in die Brühkammer (5) eingebrachten Rohgetränkematerials ermöglicht,
- **gekennzeichnet durch** die Vielzahl von Armen (11), die bei geschlossener Abdeckung (6) von der Abdeckung (6) zur Brühkammer (5) hin geneigt sind, wobei das Sprühelement (9) ferner ein Kopfstück (12) aufweist, das mit Löchern (10) versehen ist und mit dem die Arme (11) verbunden sind.

2. Eine Heißgetränkezubereitungsmaschine (1), wie in Anspruch 1 aufgeführt, **ist dadurch gekennzeichnet, dass** eine Vielzahl von Kanälen (13), die an jedem Arm (11) angeordnet sind und die Löcher (10) in dem Bereich aufweisen, der dem Rohgetränkematerial am nächsten liegt.

3. Eine Heißgetränkezubereitungsmaschine (1), wie in Anspruch 2 aufgeführt, **ist dadurch gekennzeichnet, dass** aufeinanderfolgende Kanäle (13), die jeweils länger als die anderen sind, auf demselben Arm (11) angeordnet sind.

4. Eine Heißgetränkezubereitungsmaschine (1), wie in einem der vorherigen Ansprüchen aufgeführt, **ist dadurch gekennzeichnet, dass** eine Zuführungsleitung (14) mit einem Ende am Wasserbehälter (3) und dem anderen Ende am Sprühelement (9), die für die Zuführung des im Wasserbehälter (3) erwärmten Wassers zur Brühkammer (5) sorgt, und das Kopfstück (12), das das über die Zuführungsleitung (14) zugeführte Wasser auf die Arme (11) verteilt.

5. Eine Heißgetränkezubereitungsmaschine (1), wie in Anspruch 4 aufgeführt, **ist dadurch gekennzeichnet, dass** das Kopfstück (12) von der Zuführungsleitung (14) zu den Armen (11) geneigt ist.

6. Eine Heißgetränkezubereitungsmaschine (1), wie in einem der vorherigen Ansprüchen aufgeführt, **ist dadurch gekennzeichnet, dass** eine Nut (15), die um das Kopfstück (12) herum angeordnet ist, einen Ring (16), auf dem die Arme (11) in einer kreisförmigen Anordnung angeordnet sind, und einen kreisförmigen Vorsprung (17), der es ermöglicht, den Ring (16) an der Nut (15) zu befestigen.

7. Eine Heißgetränkezubereitungsmaschine (1), wie in einem der Ansprüche 2 bis 6 aufgeführt, **ist dadurch gekennzeichnet, dass** eine Vielzahl von Verschlüssen (18), die jeweils an dem Teil angeordnet sind, an dem jeder Kanal (13) mit dem Kopfstück (12) verbunden ist, und die die Zufuhr von Wasser zu den Kanälen (13) steuern, und eine Steuereinheit (19), die die Verschlüsse (18) in Abhängigkeit von der Menge an Rohgetränkematerial steuert.

8. Eine Heißgetränkezubereitungsmaschine (1), wie in Anspruch 7 aufgeführt, **ist dadurch gekennzeichnet, dass** die Steuereinheit (19) bei geöffneter Abdeckung (6) die Abgabe von Wasser aus dem Sprühelement (9) verhindert.

## Revendications

1. Machine de préparation de boissons chaudes (1) **comprenant**
- un corps (2),
- un réservoir d'eau (3) dans lequel l'eau est remplie ;
- un chauffe-eau (4) permettant de chauffer l'eau du réservoir (3) ;
- une chambre de brassage (5) dans laquelle la matière première de la boisson à préparer est placée et dans laquelle l'eau chauffée dans le réservoir d'eau (3) est transférée, le processus de brassage étant réalisé grâce à l'interaction entre la matière première de la boisson et l'eau ;
- un couvercle (6) pour isoler la chambre de brassage (5) de l'environnement extérieur ;
- un boîtier (7) situé sur le corps (2), sous la chambre de brassage (5) ;
- un pot (8) placé dans le boîtier (7), dont la surface supérieure est au moins partiellement ouverte et dans lequel la boisson brassée dans la chambre de brassage (5) est transférée ; et
- un élément de pulvérisation (9) comportant plusieurs bras (11) percés de plusieurs trous (10) pour envoyer de l'eau sur la matière première de la boisson, qui est placé sur le couvercle (6) et qui permet de mouiller la matière première de la boisson introduite dans la chambre de brassage (5),
- **caractérisé par** la pluralité de bras (11) qui, lorsque le couvercle (6) est fermé, sont inclinés du couvercle (6) vers la chambre de brassage (5), et par le fait que l'élément de pulvérisation (9) comporte en outre une pièce de tête (12) percée d'orifices (10) et à laquelle les bras (11) sont reliés.

2. Machine de préparation de boissons chaudes (1) selon la déclaration 1, **caractérisée par** une pluralité de canaux (13) qui sont disposés sur chaque bras (11) et qui ont les trous (10) dans la région la plus proche de la matière première de la boisson.

3. Machine de préparation de boissons chaudes (1) selon la déclaration 2, **caractérisée par** des canaux successifs (13) plus longs les uns que les autres, qui sont disposés sur un même bras (11).

4. Machine à préparer des boissons chaudes (1) selon l'une quelconque des déclarations précédentes, **caractérisée par** une conduite de refoulement (14) dont une extrémité se trouve sur le réservoir d'eau (3) et l'autre sur l'élément de pulvérisation (9), qui assure l'acheminement de l'eau chauffée dans le réservoir d'eau (3) vers la chambre de brassage (5), et par la pièce de tête (12) qui distribue l'eau acheminée par la conduite de refoulement (14) vers les bras (11).

5. Machine de préparation de boissons chaudes (1) selon la déclaration 4, **caractérisée par** la pièce de tête (12) qui est inclinée de la ligne de distribution (14) vers les bras (11).

6. Machine de préparation de boissons chaudes (1) selon l'une quelconque des déclarations précédentes, **caractérisée par** une rainure (15) qui est disposée autour de la pièce de tête (12), un anneau (16) sur lequel les bras (11) sont disposés de façon circulaire, et une saillie circulaire (17) qui permet de monter le rebord (16) sur la rainure (15).

7. Machine de préparation de boissons chaudes (1) selon l'une quelconque des déclarations 2 à 6, **caractérisée par** une pluralité d'obturateurs (18) disposés chacun à l'endroit où chaque canal (13) est relié à la pièce de tête (12), contrôlant l'arrivée d'eau dans les canaux (13), et une unité de commande (19) qui commande les obturateurs (18) en fonction de la quantité de matière première de la boisson.

8. Machine de préparation de boissons chaudes (1) selon la déclaration 7, **caractérisée par** l'unité de commande (19) qui empêche l'eau d'être délivrée par l'élément de pulvérisation (9) lorsque le couvercle (6) est ouvert.
